# FASCICULE DE BREVET EUROPEEN

(11) **EP 3 891 838 B1**
(45) Date de publication et mention de la délivrance du brevet: **14.01.2026**
(21) Numéro de dépôt: 19753162.7
(22) Date de dépôt: 16.07.2019
(51) Int. Cl.: H01M 10/625, H01M 10/643, H01M 10/6555

(54) **ÉCHANGEUR DE CHALEUR POUR COMPOSANT ÉLECTRIQUE ET ENSEMBLE DUDIT ÉCHANGEUR ET DUDIT COMPOSANT**
WÄRMETAUSCHER FÜR EIN ELEKTRISCHES BAUTEIL UND MONTAGE DES WÄRMETAUSCHERS UND DES BAUTEILS
HEAT EXCHANGER FOR AN ELECTRICAL COMPONENT, AND ASSEMBLY OF SAID HEAT EXCHANGER AND COMPONENT

(30) Priorité: 04.12.2018 FR 1872324
(43) Date de publication de la demande: 13.10.2021
(73) Titulaire: Valeo Systèmes Thermiques, 78322 Le Mesnil Saint Denis Cedex (FR)
(72) Inventeur: MULLER, Jean Damien, 72210 LA SUZE SUR SARTHE (FR); TISON, Frédéric, 72210 LA SUZE SUR SARTHE (FR)
(74) Mandataire: Valeo Powertrain Systems
(86) Numéro de dépôt international: PCT/FR2019/051773
(87) Numéro de publication internationale: WO 2020/115376

(56) Documents cités:
- DE-A1- 102012 021 990
- DE-A1- 102012 217 869
- US-A1- 2013 040 175
- US-A1- 2018 337 434

## Description

La présente invention concerne un échangeur de chaleur pour composant électrique, typiquement pour des cellules d'une batterie. Ledit composant pourra encore être un composant électronique de puissance. Ledit échangeur pourra être utilisé aussi bien pour refroidir que pour réchauffer le composant électrique. L'invention est destinée, notamment, aux véhicules automobiles, en particulier aux véhicules automobiles électriques ou hybrides. Plus particulièrement, l'invention se rapporte à des échangeurs de chaleur conformes au préambule de la revendication 1, et tels que divulgués par US 2013/ 040 175A1.

Le déposant a déjà proposé dans une demande de brevet non publiée à la date de la présente demande un échangeur de chaleur comprenant un corps définissant des canaux primaires et des canaux secondaire, parallèles et contiguës, dans lesquels une circulation de fluide s'effectue en série des canaux primaires vers les canaux secondaires, selon une circulation en U. Des cellules d'une batterie à refroidir ou réchauffer sont disposées sur chaque face du corps au niveau de surfaces d'échange de chaleur entre le fluide circulant dans lesdits canaux et lesdites cellules.

Une telle configuration est avantageuse en ce qu'elle permet de refroidir ou de réchauffer un grand nombre de cellules dans un encombrement optimisé.

Pour un bon fonctionnement de la batterie, il est nécessaire que l'écart de température entre la cellule la plus froide et la cellule la plus chaude soit inférieur à 5° C.

Pour cela, dans la demande de brevet évoquée plus haut, chaque cellule est située en vis-à-vis de l'un des canaux primaires et de l'un des canaux secondaires. En effet, si l'on prend le cas d'un refroidissement des cellules, le fluide se réchauffe le long desdits canaux en échangeant de la chaleur avec les cellules de sorte que sa température est a priori minimale en entrée des canaux primaires et maximale en sortie des canaux secondaires. Ainsi, en positionnant chaque cellule à la fois en vis-à-vis de l'un des canaux primaires et de l'un des canaux secondaire, l'ensemble des cellules est a priori refroidi par une portion de fluide plus froid et une portion de fluide plus chaud de sorte que l'on pouvait espérer que l'échange de chaleur avec le fluide tende vers une moyenne uniforme pour l'ensemble des cellules.

Cependant, avec la configuration des canaux illustrés dans cette demande de brevet, les canaux primaires et les canaux secondaires étant de largeur identique, il a été constaté que l'échange de chaleur ne s'opérait pas selon les prévisions effectuées, ceci au détriment de la limitation de l'écart de température entre la cellule la plus froide et la cellule la plus chaude.

Plus précisément, il a pu être établi par le déposant, que, en raison d'une montée en température trop importante du fluide dans les canaux primaires, des échanges de chaleur intervenaient entre le fluide circulant dans les canaux primaires et le fluide, devenu trop chaud, circulant dans les canaux secondaires. Le phénomène de moyenne espérée était donc limité.

L'invention s'appuie sur ces constations et vise à résoudre au moins en partie les problèmes évoqués plus haut en proposant un échangeur de tel que défini en revendication 1.

Par « surface d'échange », on entend une surface en vis-à-vis de laquelle le composant à refroidir ou réchauffé est destiné à s'étendre.

En limitant la largeur des canaux primaires, on limite de la sorte l'échange de chaleur entre le composant et le fluide circulant dans lesdits canaux primaires. Ceci favorise une évolution progressive de la température du fluide tout le long de sa circulation entre une entrée des canaux primaires jusqu'à une sortie des canaux secondaires. Il est de la sorte possible de disposer à la surface du corps de zones proposant une moyenne d'échange de chaleur avec le fluide relativement stable pour l'ensemble des zones.

Suivant des modes particuliers de réalisation, l'échangeur comprend l'une ou plusieurs des caractéristiques suivantes, prise(s) seule(s) ou selon toute combinaison techniquement possible :
- lesdits canaux primaires et secondaires présentent une largeur constante,
- un ratio de largeur entre le ou les canaux secondaires et le ou les canaux primaires est compris entre 1,5 et 4, préférentiellement 2,
- lesdits canaux primaires et lesdits canaux secondaires sont disposés de façon alternée,
- le fluide caloporteur est préférentiellement de l'eau glycolée, et/ou un fluide frigorigène
- lesdits canaux primaires et lesdits canaux secondaires sont disposés en vis-à-vis de l'ensemble de la surface d'échange,
- le premier corps présente deux bords longitudinaux, longés chacun par deux demi-canaux primaires,
- ladite surface d'échange est sensiblement rectangulaire,
- l'échangeur comprend un collecteur permettant une circulation du fluide vers les canaux primaires et/ou en provenance des canaux secondaires,
- ledit collecteur présente une entrée et/ou une sortie pour le passage du fluide,
- le premier corps comprend une zone de raccordement située entre le collecteur et une entrée des canaux primaires et/ou entre une sortie des canaux secondaires et le collecteur,
- ladite zone de raccordement comprend des premiers convergents pour le passage du fluide entre le collecteur et l'entrée des canaux primaires,
- lesdits premiers convergent comprennent un col primaire en communication avec l'entrée des canaux primaires,
- lesdits cols primaires s'étendent selon une extension longitudinale desdits canaux primaires,
- une largeur des cols primaires diffère en fonction de la proximité desdits cols primaires avec l'entrée de fluide du collecteur, l'un des cols primaires, plus proche de ladite entrée du collecteur, présentant une largeur plus faible que l'un des cols primaires, plus éloigné de ladite entrée du collecteur,
- ladite zone de raccordement comprend des seconds convergents pour le passage du fluide entre le collecteur et la sortie des canaux secondaires,
- lesdits seconds convergents comprennent un col secondaire en communication avec le collecteur,
- les cols secondaires sont entre les premiers convergents,
- lesdits cols secondaires s'étendent selon une extension longitudinale desdits canaux secondaires,
- une largeur des cols secondaires diffère en fonction de la proximité desdits cols secondaires avec la sortie de fluide du collecteur, l'un des cols secondaires, plus proche de ladite sortie du collecteur, présentant une largeur plus faible que l'un des cols secondaires, plus éloigné de ladite sortie du collecteur,
- ledit collecteur comprend des emboutis primaires pour contrôler l'écoulement du fluide entre l'entrée du collecteur et les canaux primaires et/ou des emboutis secondaires pour contrôler l'écoulement du fluide entre les canaux secondaires et la sortie du collecteur,
- ledit collecteur comprend un embouti, dit d'entrée, créant une chambre de répartition du fluide au voisinage de l'entrée du collecteur,
- ledit embouti d'entrée est orienté de façon identique aux emboutis secondaires,
- ledit embouti d'entrée présente une configuration annulaire,
- ledit embouti d'entrée et le convergent associé à l'un des canaux primaire, situé à proximité de ladite entrée du collecteur, sont en continuité l'un de l'autre,
- l'échangeur comprend un deuxième corps symétrique au premier corps par rapport au collecteur,
- l'échangeur comprend un empilement de plaques,
- l'empilement de plaques définit ledit collecteur, ledit premier corps et/ou ledit deuxième corps,
- l'empilement comprend une plaque intermédiaire,
- ladite plaque intermédiaire est emboutie,
- la plaque intermédiaire présente des ondulations permettant de définir un fond et des parois latérales des canaux primaires et/ou secondaire, des premiers et seconds convergents, des cols primaires et/ou secondaire et/ou des emboutis primaires, secondaires et/ou d'entrée,
- les parois latérales des canaux sont sensiblement rectilignes,
- ladite plaque intermédiaire définit un fond et des parois latérales de boîtes collectrices de passage du fluide des canaux primaires vers les canaux secondaires,
- ladite boîte collectrice présente des alvéoles formant des surfaces déflectrice pour guider le fluide dans ladite boîte de l'un des canaux primaires vers les canaux secondaires voisins,
- ladite plaque intermédiaire présente au niveau desdites boites collectrices des fentes, chaque fente étant située en vis-à-vis d'une extrémité débouchante de l'un des canaux secondaires,
- ledit empilement de plaques comprend en outre une première plaque externe en vis-à-vis de laquelle une première partie des cellules sont destinées à être positionnées, sur une première face dudit échangeur,
- ledit empilement de plaque comprend en outre une deuxième plaque externe en vis-à-vis de laquelle une autre partie des cellules sont destinées à être positionnées, sur une deuxième face dudit échangeur, opposée à la première face,
- la première plaque externe présente un fond plat et des bords relevés
- la seconde plaque externe est plane,
- la plaque intermédiaire présent un bord périphérique plat, pris en sandwich entre les bords relevés de la première plaque externe et un bord périphérique de la deuxième plaque externe,
- ledit échangeur présente des connectiques d'entrée et de sortie, respectivement en relation avec l'entrée et la sortie du collecteur.

L'invention concerne aussi un ensemble d'un composant électrique et d'un échangeur tel que décrit plus haut.

Suivant des modes particuliers de réalisation, ledit ensemble comprend l'une ou plusieurs des caractéristiques suivantes, prise(s) seule(s) ou selon toute combinaison techniquement possible :
- le composant est en contact avec ledit premier corps et/ou ledit second corps en vis-à-vis desdits canaux primaires et secondaires,
- le composant comprend des cellules d'une batterie de stockage d'électricité,
- les cellules sont en regard à la fois de l'un des canaux primaires et de l'un des canaux secondaires,
- les cellules sont situés de chaque côté dudit premier corps et/ou dudit deuxième corps.

De façon purement illustrative, un exemple détaillé sera maintenant décrit, sur la base des figures, sur lesquelles :
[Fig.1] la figure 1 est une vue en perspective d'un échangeur de chaleur selon un mode de réalisation de l'invention, muni sur ses deux faces de cellules de batterie électrique ;
[Fig.2] la figure 2 est une vue de face d'une plaque intermédiaire dudit échangeur;
[Fig.3] la figure 3 est une vue en perspective d'une partie centrale de la plaque intermédiaire de la figure 2, vue du dessus;
[Fig.4] la figure 4 est une vue en perspective de la partie centrale de la plaque intermédiaire de la figure 2, vue du dessous;
[Fig.5] la figure 5 est une vue en perspective d'une partie d'extrémité longitudinale de la plaque intermédiaire de la figure 2, vue du dessus;
[Fig.6] la figure 6 est une vue en perspective de la partie d'extrémité longitudinale de la figure 5, vue du dessous,
[Fig.7] la figure 7 illustre en vue de dessus et par transparence le positionnement relatif des cellules électriques et des canaux de circulation de fluide d'un échangeur, selon une configuration conforme à l'invention.

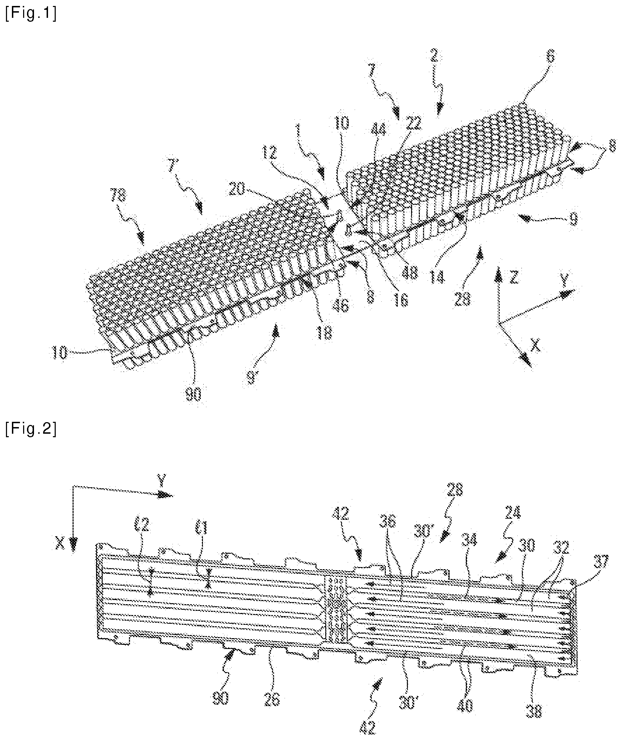

Comme illustré à la figure 1 l'invention concerne un échangeur de chaleur 1 pour composant électrique 4, notamment pour composant électrique d'un véhicule automobile.

Le composant 4 est ici formé d'une batterie de stockage d'électricité comprenant des cellules électriques 6. Lesdites cellules sont reliées entre elle électriquement en série et/ou en parallèle, par exemple au niveau de l'une de leur extrémité. Lesdites cellules sont, par exemple, cylindrique, de section circulaire.

On constate que les cellules sont ici réparties en quatre groupes, deux groupes supérieurs 7, 7'et deux groupes inférieurs 9, 9'.

Lesdites cellules 6 sont préférentiellement distribuées de façon régulière selon des rangs orientés selon une première direction X, les différents rangs se succédant selon une seconde direction Y, perpendiculaire à la direction X. Les cellules sont disposées en quinconce d'un rang à l'autre.

Le composant 4 est au contact dudit échangeur 1. Autrement dit, ici, les cellules 6 sont au contact dudit échangeur 1, par exemple par l'une de leur extrémité, à savoir l'extrémité opposée à celle par laquelle elles sont reliées électriquement. Encore autrement dit, les cellules 6 sont en contact avec l'échangeur par une surface formant un disque.

Ledit échangeur définit une ou plusieurs surfaces d'échanges 8, ici quatre correspondant chacune à l'un des groupes 7, 7', 9, 9' de cellules 6. Par « surface d'échange », on entend ainsi une surface en vis-à-vis de laquelle le composant 4 à refroidir ou réchauffé est destiné à s'étendre. On constate qu'ici, les surfaces d'échange sont sensiblement rectangulaires.

Ledit échangeur comprend préférentiellement une couche de contact 10 entre lesdites cellules 6 et les surfaces d'échange 8. Ladite couche de contact 10 est formée d'un matériau thermiquement conducteur. Ledit matériau est avantageusement déformable de manière à absorber les dispersions de fabrication des différents cellules 6 et/ou une déformation de matière provenant de phénomènes de dilatations thermiques différentielles. Il s'agit préférentiellement d'une colle thermique permettant le maintien mécanique des différentes cellules 6 sur les surfaces d'échange 8.

Ledit échangeur comprend préférentiellement un empilement de plaques, lesdites plaques étant empilées selon une directions Z, orthogonale aux directions X et Y. Autrement dit, lesdites plaques s'étendent sensiblement selon lesdites directions X et Y. L'échangeur présente une épaisseur, selon la direction Z, très inférieure à sa longueur, selon la direction Y, et à sa largeur, selon la direction X.

Lesdites plaques sont, par exemple, en aluminium et/ou alliage d'aluminium. Elles sont assemblées, notamment, par brasage.

L'empilement comprend ici une première plaque externe 12 en vis-à-vis de laquelle une première partie des cellules 6 est positionnée sur une première face 14 dudit échangeur. Ladite première plaque externe 12 définit ici deux des surfaces d'échanges 8, correspondant aux groupes supérieurs 7, 7' des cellules 6.

L'empilement comprend en outre une deuxième plaque externe, non-visible, en vis-à-vis de laquelle une autre partie des cellules 6 est positionnée, sur une deuxième face dudit échangeur, opposée à la première face 14 de l'échangeur. Ladite deuxième plaque externe définit ici deux autres des surfaces d'échanges 8, correspondant aux groupes inférieurs 9,9' des cellules 6.

La première plaque externe 12 présente un fond 16 sensiblement plat et des bords relevés 18. Les surfaces d'échange 8, correspondant aux groupes supérieurs 7, 7' des cellules 6 sont positionnées au niveau dudit fond 16 de la première plaque externe 12 et les couches de contact 10 correspondantes sont situées entre ledit fond 16 de la première plaque externe 12 et chacun des groupes supérieurs 7,7' de cellules 6.

La seconde plaque externe est plane. Les couches de contact 10 correspondant aux dites autres surface d'échange 8 sont situées entre ladite deuxième plaque externe et chacun des groupes inférieurs 9,9' de cellules 6.

La première plaque externe 12 et la seconde plane externe définissent entre elles un volume à l'intérieur duquel un fluide d'échange de chaleur, en particulier un fluide caloporteur, tel que de l'eau glycolée, et/ou frigorigène, parcourant l'échangeur est destiné à circuler.

Pour la circulation dudit fluide, ledit échangeur présente en outre ici des connectiques d'entrée 20 et de sortie 22 en relation avec le volume intérieur défini entre la première plaque externe 12 et la seconde plane externe. Lesdites connectiques d'entrée 20 et de sortie 22 sont sensiblement sur une même droite orientée selon la direction X.

Préférentiellement, l'échangeur de chaleur comprend en outre des brides 90 d'accrochage à un support.

Comme illustré à la figure 2, l'empilement de plaques comprend une plaque intermédiaire 20, préférentiellement emboutie.

La plaque intermédiaire 24 présente un bord périphérique 26 plat, pris en sandwich entre les bords relevés 18 de la première plaque externe 12 et un bord périphérique de la deuxième plaque externe. Autrement dit, ladite plaque intermédiaire 24 s'étend dans le volume intérieur défini entre la première plaque externe 12 et la seconde plaque externe De telles caractéristique permettent de favoriser une bonne étanchéité de l'empilement de plaques.

La circulation du fluide à travers l'échangeur va maintenant être décrite.

Ledit échangeur comprend un premier corps 28 défini ici par une partie de l'empilement de plaques, en l'occurrence une partie située à droite sur les figures 1 et 2.

Ledit corps 28 définit au moins un canal primaire 30 et un canal secondaire 32, parallèles et contiguës. Lesdits canaux s'étendent selon ladite seconde direction Y.

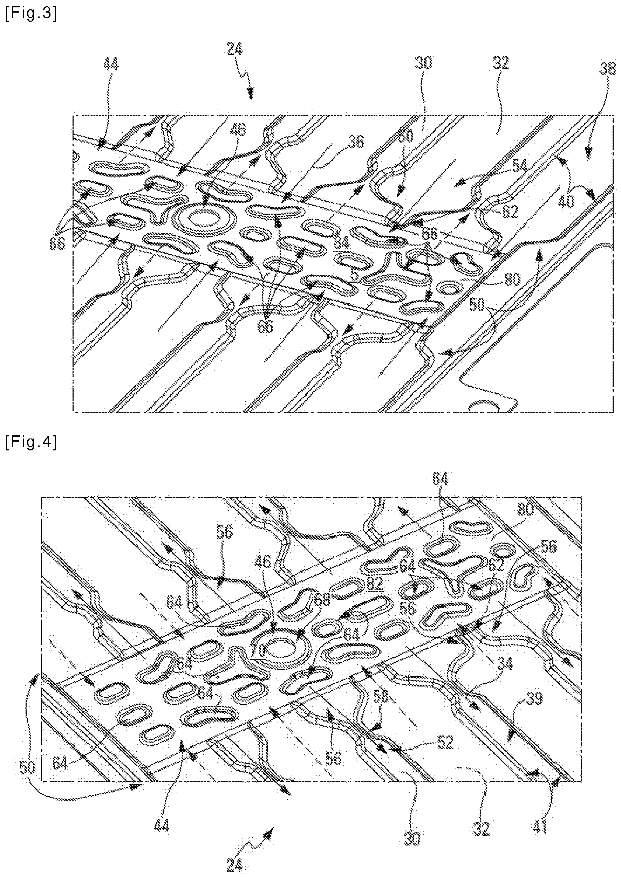

Dans lesdits canaux primaires et secondaires, la circulation de fluide s'effectue en série du canal primaire 30 vers le canal secondaire 32, selon des sens opposés, tel que cela est représenté par les flèches repérées 34 correspondant au sens de circulation du fluide dans les canaux primaires 30 et par les flèches repérées 36 correspondant au sens de circulation du fluide dans les canaux secondaires 32. Les flèches 34 sont illustrées en pointillés car les canaux primaires sont définis au niveau d'une face inférieure de la plaque intermédiaire 24 et sont donc non-visible à la figure 2. Les flèches 36 sont illustrées en traits pleins car les canaux secondaires sont situés au niveau d'une face supérieure de la plaque intermédiaire 24 et donc visible à la figure 2. La même convention est conservée aux figures 3 à 6. On comprend que les canaux primaires 30 et les canaux secondaires 32 sont situés de part et d'autre de ladite plaque intermédiaire 24.

Lesdits canaux primaires 30 et lesdits canaux secondaires 32 sont disposés de façon alternée, préférentiellement sur l'ensemble de l'étendue de chacune des surfaces d'échange 8. Les surfaces d'échange de chaleur 8 permettent ainsi un échange de chaleur entre le fluide circulant dans lesdits canaux primaires et secondaires, d'une part, et, d'autre part, ledit composant 6.

La plaque intermédiaire 24 présente des ondulations permettant de définir un fond et des parois latérales des canaux primaires, non visible à la figure 2, ainsi qu'un fond 38 et de parois latérales 40 des canaux secondaires 32.

Les canaux primaires 30 sont fermés par ladite deuxième plaque externe. Du côté opposé à celui du passage du fluide, le fond des canaux primaires est fixé au fond 16 de ladite première plaque externe 12. Les canaux secondaires 32 sont fermés par le fond 16 de ladite première plaque externe 12. Du côté opposé à celui du passage du fluide, le fond des canaux secondaires est fixé à ladite seconde plaque externe.

Les parois latérales des canaux primaires et secondaires sont de façon préférentielle sensiblement rectilignes.

Ledit premier corps 28 comprend en outre une boîte collectrice de passage du fluide des canaux primaires 30 vers les canaux secondaires 32, selon des flèches repérées 37. Dans lesdites boîtes collectrices, le fluide fait demi-tour et, selon l'exemple illustré, passe d'un côté de la plaque intermédiaire 24 à l'autre. La configuration de la plaque intermédiaire 24 à ce sujet sera détaillée plus loin.

Selon l'invention, une largeur I1 des canaux primaires 30 est inférieure à une largeur I2 des canaux secondaires 32. Comme déjà expliqué plus haut, ceci favorise un échange de chaleur uniformisé entre le fluide circulant dans les canaux primaires et secondaires, d'une part, et, d'autre part, le composant 6, ceci sur toute l'étendue de chacune des surfaces d'échange de chaleur 8.

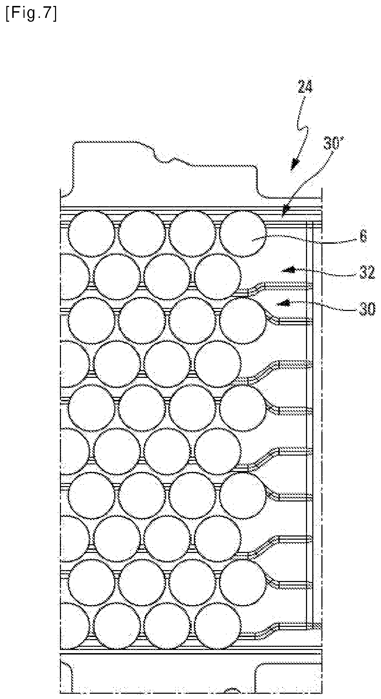

Lesdits canaux primaires 30 et secondaires 32 présentent avantageusement une largeur, respectivement I1 et I2, constante en vis-à-vis desdites surfaces d'échange 8. Il est cependant à noter que, dans l'échangeur conforme à l'invention, une portion de surface du rang de cellules se trouvant chaque extrémité des groupes, selon la seconde direction Y, pourront déborder desdites surfaces d'échange 8 (voir figure 7).

Un ratio préférentielle I2/I1 de largeur entre le ou les canaux secondaires 32 et le ou les canaux primaires 30' est compris entre 1,5 et 4, préférentiellement autour de 2. Il a été constaté qu'en dessous de 2, l'uniformisation de l'échange de chaleur en surface de l'échangeur restait limitée. Il a par ailleurs été constaté qu'au-dessus de 4, l'échangeur présentait des problèmes de résistance à la pression interne. Par ailleurs, l'avantage en termes d'uniformisation de l'échange de chaleur en surface atteignait une limite alors que les pertes de charge devenaient trop fortes.

Dans l'exemple illustré, le premier corps 28 présente deux bords longitudinaux 42, longés chacun par deux demi-canaux primaires 30. Ils permettent d'assurer l'uniformisation de l'échange de chaleur jusqu'au bord des surfaces d'échange 8.

Comme cela est détaillé aux figures 3 et 4, l'échangeur 1 comprend un collecteur 44 permettant une circulation du fluide vers les canaux primaire 30 et/ou en provenance des canaux secondaires 32. Ledit collecteur 44 présente une entrée 46 et/ou une sortie 48 pour le passage du fluide, respectivement en communication avec les connectiques d'entrée 20 et de sortie 22. Ladite entrée 46 est ménagée à la fois à travers la première plaque externe 12 et la plaque intermédiaire 24. Ladite sortie 48 est ménagée à travers la première plaque externe 12 seulement.

La plaque intermédiaire 24 présente une portion médiane 80 définissant, en combinaison avec les première et deuxième plaques externes, deux chambres de circulation du fluide. Une première 82 des chambres, visible figure 4, forme une chambre d'entrée en communication avec les canaux primaires 30. Elle est située entre ladite portion médiane 80 et la deuxième plaque externe. Elle est alimentée par l'entrée 46 dudit collecteur 44. Une seconde 84 des chambres, visible figure 3, forme une chambre de sortie en communication avec les canaux secondaires 32. Elle est située entre ladite portion médiane 80 et le fond de la première plaque externe. Elle est en communication avec ladite sortie 48 du collecteur 44. Ladite portion médiane 80 est préférentiellement située, selon l'axe Z, à égale distance des première et deuxième plaques externes.

Comme cela sera détaillé dans la suite, l'échangeur est configuré pour favoriser une bonne répartition du fluide dans chacun des canaux primaires 30 et secondaires 32, en fonction du positionnement desdites entrée/sortie 46, 48.

Pour cela le premier corps 28 comprend ici une zone de raccordement 50, située entre le collecteur 44 et une entrée 52 des canaux primaires 30 et/ou entre une sortie 54 des canaux secondaires 32 et le collecteur 44.

Comme cela ressort mieux figure 4, ladite zone de raccordement 50 comprend des premiers convergents 56 pour le passage du fluide entre le collecteur 44 et l'entrée 52 des canaux primaires 30. Par « convergent », on entend une portion dont la section, en particulier la largeur, décroit selon le sens d'écoulement du fluide. Lesdits premiers convergents 56 se prolongent par un col primaire 58 en communication avec l'entrée 52 des canaux primaires 30. Lesdits cols primaires 58 s'étendent selon la direction d'extension longitudinale Y desdits canaux primaires 30, chacun des cols primaires 58 conservant une largeur constante.

Cela étant, une largeur des cols primaires 58 diffère en fonction de la proximité desdits cols primaires 58 avec l'entrée 46 de fluide du collecteur. Le ou les cols primaires les plus proches de ladite entrée 46 du collecteur 44 présentent une largeur plus faible que le ou les cols primaires 58 les plus éloignés de ladite entrée 46 du collecteur 44. Ici, les trois cols primaires 58 les plus proches de l'entrée 46 du collecteur 44 présentent sensiblement la même largeur et le col primaire 58 le plus éloigné, à droite sur la figure, présente une plus grande largeur.

Comme cela ressort mieux figure 3, ladite zone de raccordement 50 comprend en outre des seconds convergents 60 pour le passage du fluide entre le collecteur 44 et la sortie 54 des canaux secondaires 32. Lesdits seconds convergents se prolongent par un col secondaire 62 en communication avec le collecteur 44.

Lesdits cols secondaires 62 s'étendent selon la direction Y d'extension longitudinale desdits canaux secondaires 32, chacun des cols secondaires 62 conservant une largeur constante.

Cela étant, une largeur des cols secondaires 62 diffère en fonction de la proximité desdits cols secondaires avec la sortie 48 de fluide du collecteur 44. Le ou les cols secondaires les plus proches de ladite sortie 48 du collecteur 44 présentent une largeur plus faible que le ou les cols secondaires 62 les plus éloignés de ladite sortie 48 du collecteur 44. Ici, les cols secondaires 62 présentent une largeur croissante en s'éloignant de ladite sortie 48 du collecteur 44, dont l'emplacement, en projection, est repéré S sur la figure.

Les cols secondaires 62 sont entre les premiers convergents 56. Ceci a d'ailleurs pour effet de modifier la taille d'une largeur d'entrée desdits premiers convergents 56, le ou les premiers convergents 56 situés à proximité de l'entrée 46 du collecteur 44 présentant une embouchure plus faible que le ou les premiers convergents 56 plus éloignés.

La plaque intermédiaire 24 présente des ondulations permettant de définir un fond et des parois latérales des premiers et seconds convergents 56, 60 ainsi que des cols primaires et/ou secondaire 58, 62. Le fond des premiers convergents 56 et des cols primaires 58 est situé à un même niveau, selon la direction Z, que le fond 41 des canaux primaires 30. Le fond 40 des seconds convergents 60 et des cols secondaires 62 est situé à un même niveau, selon la direction Z, que le fond 40 des canaux secondaires 32. Les parois latérales des premiers et seconds convergents 56, 60 et des cols primaires et secondaires 58, 62 sont respectivement dans la continuité des parois longitudinales 41, 40 des conduits primaires et secondaires 30, 32.

Ledit collecteur 44 comprend des emboutis primaires 64, saillant figure 4, pour contrôler l'écoulement du fluide entre l'entrée 46 du collecteur 44 et les canaux primaires 30 et des emboutis secondaires 66, saillant figure 3, pour contrôler l'écoulement du fluide entre les canaux secondaires 32 et la sortie 48 du collecteur 44.

Lesdits emboutis primaires et secondaires 64, 66 présentent des formes diverses en fonction de leur positionnement dans le collecteur 44, par exemple une forme sensiblement circulaire, allongée, en chevron ou en étoile à trois branches.

A la figure 4, on voit que certains des emboutis primaires 64 sont situés à l'entrée des premiers convergents 56. Ils ont la forme de chevron pour les plus proches de ladite entrée 46 du collecteur 44 et ils ont une forme allongée pour les plus éloignés. D'autres sont situés sur une même ligne, selon la direction X, que ladite entrée 46 du collecteur 44. Ils ont une forme en étoile à trois branches pour le plus proche et allongée ou circulaire pour les autres.

A la figure 3, on voit que certains des emboutis secondaires 66 sont situés à la sortie des seconds convergents 60. Ils ont la forme de chevron pour les plus proches de ladite sortie 48 du collecteur 44 et ils ont une forme allongée pour les plus éloignés. D'autres sont situés sur une même ligne, selon la direction X, que ladite sortie 48 du collecteur 44. Ils ont une forme en étoile à trois branches pour le plus proche et allongée ou circulaire pour les autres.

De nouveau à la figure 4, on constate que ledit collecteur 44 comprend un embouti 68, dit d'entrée, créant une chambre 70 de répartition du fluide au voisinage de l'entrée de fluide 46. Ledit embouti d'entrée 68 est orienté de façon identique aux emboutis secondaires 66. Ledit embouti d'entrée 68 présente une configuration annulaire. Il permet d'éviter l'apparition de phénomènes de survitesse pour le fluide entrant dans le collecteur 44, compte-tenu de la faible hauteur de la chambre d'entrée 82.

En variante non illustrée, ledit embouti d'entrée et le premier convergent associé à l'un des canaux primaires, situé à proximité de ladite entrée du collecteur, sont en continuité l'un de l'autre.

La plaque intermédiaire 24 présente des ondulations permettant de définir les emboutis primaires 64 et/ou secondaires 66. Un sommet des emboutis primaires 64 est situé à un même niveau, selon la direction Z, que le fond des canaux secondaires 32. Un sommet des emboutis secondaires 66 est situé à un même niveau, selon la direction Z, que le fond des canaux primaires 30.

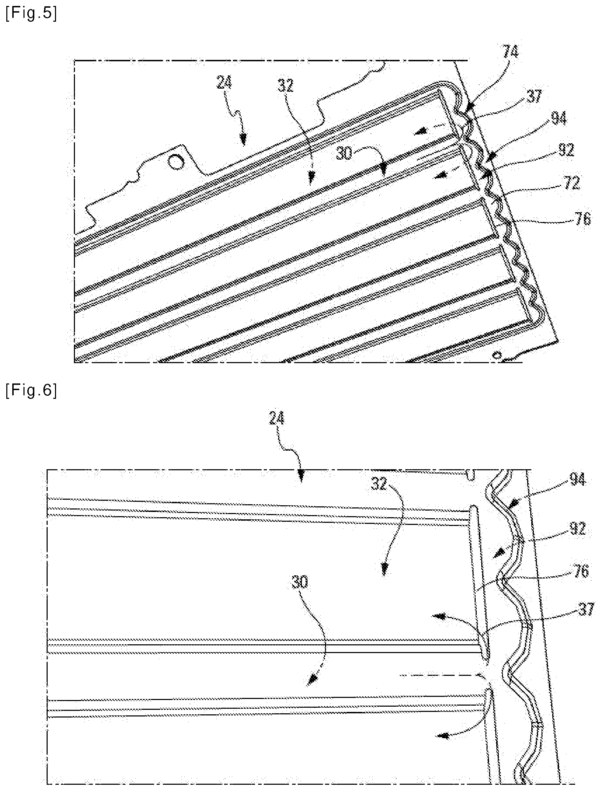

Comme illustré aux figures 5 et 6, ladite plaque intermédiaire 24 définit un fond 92 et des parois latérales 94 des boîtes collectrices de passage du fluide des canaux primaires 30 vers les canaux secondaires 32.

Ladite boîte collectrice présente des alvéoles 72 formant des surfaces déflectrice 74 pour guider le fluide dans ladite boîte de l'un des canaux primaires 30 vers les canaux secondaires voisins 32.

Ladite plaque intermédiaire 24 présente au niveau desdites boites collectrices des fentes 76, chaque fente 76 étant située en vis-à-vis d'une extrémité débouchante de l'un des canaux secondaires 32 pour permettre le passage du fluide d'un côté à l'autre de la plaque. Les fentes 76 sont réalisées, par exemple, par enlèvement de matière avant emboutissage de la plaque intermédiaire 24 ou par crevage lors de l'emboutissage.

En variante non illustrée, la plaque intermédiaire est faite d'un intercalaire ondulé définissant lesdits canaux primaires et secondaires, la boîte collectrice, voire la zone de raccordement étant définies par emboutissage desdites première et/ou deuxième plaques externes.

En se reportant de nouveau figure 1, comme on l'aura compris, l'échangeur comprend ici un deuxième corps 78, symétrique au premier corps 28 par rapport au collecteur 44.

L'empilement de plaques définit ledit collecteur 44, ledit premier corps 28 et ledit deuxième corps 78.

Comme il ressort de ce qui précède, le composant 4 est en contact avec ledit premier corps 28 et/ou ledit second corps 78 en vis-à-vis desdits canaux primaires et secondaires 30, 32. Plus précisément, les cellules 6 sont situées de chaque côté dudit premier corps 28 et dudit deuxième corps 78. Elles sont préférentiellement fixées auxdits premier et/ou deuxième corps 28, 78.

Comme cela apparaît mieux à la figure 7, chacune des cellules 6 est en regard à la fois de l'un des canaux primaires 30, 30' et de l'un des canaux secondaires 32, une majorité de la surface d'extrémité des cellules étant en regard de l'un des canaux secondaires 32.

On pourra également constater à cette figure que ladite zone de raccordement présente une extension, selon l'axe Y, sensiblement identique au diamètre des cellules 6.

## Revendications

1. Echangeur (1) de chaleur pour composant électrique (4), ledit échangeur comprenant un premier corps (28) définissant au moins un canal primaire (30) et au moins un canal secondaire (32), parallèles contiguës, dans lesquels une circulation de fluide s'effectue en série du canal primaire (30) vers le canal secondaire (32), selon des sens opposés, ledit premier corps (28) présentant aux moins une surface d'échange de chaleur (8) entre le fluide circulant dans lesdits canaux (30, 32) et ledit composant (4), une largeur des canaux primaires (30) étant inférieure à une largeur des canaux secondaires (32),
l'échangeur est **caractérisé en ce qu'**il comprend en outre un empilement de plaques comprenant une première plaque externe en vis-à-vis de laquelle une première partie des cellules sont destinées à être positionnées, sur une première face dudit échangeur, et comprenant
une deuxième plaque externe en vis-à-vis de laquelle une autre partie des cellules sont destinées à être positionnées, sur une deuxième face dudit échangeur, opposée à la première face,
l'empilement comprenant en outre une plaque intermédiaire,
les canaux primaires (30) et les canaux secondaires (32) étant situés de part et d'autre de ladite plaque intermédiaire (24)

2. Echangeur selon la revendication 1 dans lequel un ratio de largeur entre le ou les canaux secondaires (32) et le ou les canaux primaires (2) est compris entre 1,5 et 4, préférentiellement 2.

3. Echangeur selon l'une quelconque des revendications précédentes dans lequel l'échangeur comprend un collecteur (44) permettant une circulation du fluide vers les canaux primaires (30) et/ou en provenance des canaux secondaires (32), ledit collecteur (44) présentant une entrée (46) et/ou une sortie (48) pour le passage du fluide.

4. Echangeur selon la revendication précédente dans lequel le premier corps (28) comprend une zone de raccordement (50) située entre le collecteur (44) et une entrée (52) des canaux primaires (30) et/ou entre une sortie (54) des canaux secondaires (32) et le collecteur (44).

5. Echangeur selon la revendication précédente dans lequel ladite zone de raccordement (50) comprend des premiers convergents (56) pour le passage du fluide entre le collecteur (44) et l'entrée (52) des canaux primaires (30), lesdits premiers convergents (56) comprenant un col primaire (58) en communication avec l'entrée (52) des canaux primaires (30).

6. Echangeur selon la revendication précédente dans lequel ladite zone de raccordement (50) comprend des seconds convergents (60) pour le passage du fluide entre le collecteur (44) et la sortie (54) des canaux secondaires (32), lesdits seconds convergents (60) comprenant un col secondaire (62) en communication avec le collecteur (44).

7. Echangeur selon la revendication précédente dans lequel les cols secondaires (62) sont situés entre les premiers convergents (56).

8. Echangeur selon l'une quelconque des revendications 3 à 7 dans lequel ledit collecteur (44) comprend des emboutis primaires (64) pour contrôler l'écoulement du fluide entre l'entrée (46) du collecteur (44) et les canaux primaires (30) et/ou des emboutis secondaires (66) pour contrôler l'écoulement du fluide entre les canaux secondaires (32) et la sortie (48) du collecteur (44).

9. Echangeur selon l'une quelconque des revendications 3 à 8 dans lequel ledit collecteur (44) comprend un embouti (68), dit d'entrée, créant une chambre (70) de répartition du fluide au voisinage de l'entrée (46) du collecteur (44).

10. Ensemble d'un composant électrique (4) et d'un échangeur selon l'une quelconque des revendications précédentes.

## Patentansprüche

1. Wärmetauscher (1) für eine elektrische Komponente (4), wobei der Wärmetauscher einen ersten Körper (28) umfasst, der mindestens einen primären Kanal (30) und mindestens einen sekundären Kanal (32) definiert, die parallel und angrenzend sind, in denen eine Fluidzirkulation in Reihe vom primären Kanal (30) zum sekundären Kanal (32) in entgegengesetzten Richtungen erfolgt, wobei der erste Körper (28) mindestens eine Wärmeaustauschfläche (8) zwischen dem in den Kanälen (30, 32) zirkulierenden Fluid und der Komponente (4) aufweist, wobei eine Breite der primären Kanäle (30) geringer ist als eine Breite der sekundären Kanäle (32), wobei der Wärmetauscher **dadurch gekennzeichnet ist, dass** er ferner einen Stapel von Platten umfasst, der eine erste äußere Platte umfasst, gegenüber der ein erster Teil der Zellen auf einer ersten Seite des Wärmetauschers positioniert werden soll, und eine zweite äußere Platte umfasst, gegenüber der ein anderer Teil der Zellen auf einer zweiten Seite des Wärmetauschers positioniert werden soll, die der ersten Seite gegenüberliegt, wobei der Stapel ferner eine Zwischenplatte umfasst, wobei die primären Kanäle (30) und die sekundären Kanäle (32) auf beiden Seiten der Zwischenplatte (24) angeordnet sind.

2. Wärmetauscher nach Anspruch 1, bei dem ein Breitenverhältnis zwischen dem oder den sekundären Kanälen (32) und dem oder den primären Kanälen (2) zwischen 1,5 und 4, vorzugsweise 2, liegt.

3. Wärmetauscher nach einem der vorhergehenden Ansprüche, bei dem der Wärmetauscher einen Sammler (44) umfasst, der eine Zirkulation des Fluids zu den primären Kanälen (30) und/oder von den sekundären Kanälen (32) ermöglicht, wobei der Sammler (44) einen Einlass (46) und/oder einen Auslass (48) für den Durchgang des Fluids aufweist.

4. Wärmetauscher nach dem vorhergehenden Anspruch, bei dem der erste Körper (28) einen Verbindungsbereich (50) umfasst, der zwischen dem Sammler (44) und einem Einlass (52) der primären Kanäle (30) und/oder zwischen einem Auslass (54) der sekundären Kanäle (32) und dem Sammler (44) angeordnet ist.

5. Wärmetauscher nach dem vorhergehenden Anspruch, bei dem der Verbindungsbereich (50) erste Konvergenzen (56) für den Durchgang des Fluids zwischen dem Sammler (44) und dem Einlass (52) der primären Kanäle (30) umfasst, wobei die ersten Konvergenzen (56) einen primären Hals (58) umfassen, der mit dem Einlass (52) der primären Kanäle (30) in Verbindung steht.

6. Wärmetauscher nach dem vorhergehenden Anspruch, bei dem der Verbindungsbereich (50) zweite Konvergenzen (60) für den Durchgang des Fluids zwischen dem Sammler (44) und dem Auslass (54) der sekundären Kanäle (32) umfasst, wobei die zweiten Konvergenzen (60) einen sekundären Hals (62) umfassen, der mit dem Sammler (44) in Verbindung steht.

7. Wärmetauscher nach dem vorhergehenden Anspruch, bei dem die sekundären Hälse (62) zwischen den ersten Konvergenzen (56) angeordnet sind.

8. Wärmetauscher nach einem der Ansprüche 3 bis 7, bei dem der Sammler (44) primäre Prägungen (64) umfasst, um den Fluidstrom zwischen dem Einlass (46) des Sammlers (44) und den primären Kanälen (30) zu steuern, und/oder sekundäre Prägungen (66), um den Fluidstrom zwischen den sekundären Kanälen (32) und dem Auslass (48) des Sammlers (44) zu steuern.

9. Wärmetauscher nach einem der Ansprüche 3 bis 8, bei dem der Sammler (44) eine Prägung (68), genannt Einlassprägung, umfasst, die eine Verteilungskammer (70) für das Fluid in der Nähe des Einlasses (46) des Sammlers (44) erzeugt.

10. Anordnung einer elektrischen Komponente (4) und eines Wärmetauschers nach einem der vorhergehenden Ansprüche.

## Claims

1. Heat exchanger (1) for an electrical component (4), said exchanger comprising a first body (28) defining at least one primary channel (30) and at least one secondary channel (32), parallel contiguous, in which fluid circulation occurs in series from the primary channel (30) to the secondary channel (32), in opposite directions, said first body (28) having at least one heat exchange surface (8) between the fluid circulating in said channels (30, 32) and said component (4), a width of the primary channels (30) being less than a width of the secondary channels (32), the exchanger is **characterized in that** it further comprises a stack of plates comprising a first external plate opposite which a first portion of the cells are intended to be positioned, on a first face of said exchanger, and comprising a second external plate opposite which another portion of the cells are intended to be positioned, on a second face of said exchanger, opposite to the first face, the stack further comprising an intermediate plate, the primary channels (30) and the secondary channels (32) being located on either side of said intermediate plate (24)

2. Exchanger according to claim 1 in which a width ratio between the secondary channel(s) (32) and the primary channel(s) (2) is between 1.5 and 4, preferably 2.

3. Exchanger according to any one of the preceding claims in which the exchanger comprises a manifold (44) allowing circulation of the fluid to the primary channels (30) and/or from the secondary channels (32), said manifold (44) having an inlet (46) and/or an outlet (48) for the passage of the fluid.

4. Exchanger according to the preceding claim in which the first body (28) comprises a connection zone (50) located between the manifold (44) and an inlet (52) of the primary channels (30) and/or between an outlet (54) of the secondary channels (32) and the manifold (44).

5. Exchanger according to the preceding claim in which said connection zone (50) comprises first convergents (56) for the passage of the fluid between the manifold (44) and the inlet (52) of the primary channels (30), said first convergents (56) comprising a primary throat (58) in communication with the inlet (52) of the primary channels (30).

6. Exchanger according to the preceding claim in which said connection zone (50) comprises second convergents (60) for the passage of the fluid between the manifold (44) and the outlet (54) of the secondary channels (32), said second convergents (60) comprising a secondary throat (62) in communication with the manifold (44).

7. Exchanger according to the preceding claim in which the secondary throats (62) are located between the first convergents (56).

8. Exchanger according to any one of claims 3 to 7 in which said manifold (44) comprises primary embossments (64) to control the flow of fluid between the inlet (46) of the manifold (44) and the primary channels (30) and/or secondary embossments (66) to control the flow of fluid between the secondary channels (32) and the outlet (48) of the manifold (44).

9. Exchanger according to any one of claims 3 to 8 in which said manifold (44) comprises an embossment (68), called inlet embossment, creating a distribution chamber (70) for the fluid in the vicinity of the inlet (46) of the manifold (44).

10. Assembly of an electrical component (4) and an exchanger according to any one of the preceding claims.
